(19) **Europäisches Patentamt**

**European Patent Office**

**Office européen des brevets**

(11) Veröffentlichungsnummer : **0 418 329 B1**

(12) **EUROPÄISCHE PATENTSCHRIFT**

(45) Veröffentlichungstag der Patentschrift :
20.10.93 Patentblatt 93/42

(21) Anmeldenummer : **90900079.6**

(22) Anmeldetag : **10.01.90**

(86) Internationale Anmeldenummer :
**PCT/DE90/00006**

(87) Internationale Veröffentlichungsnummer :
**WO 90/08953 09.08.90 Gazette 90/19**

(51) Int. Cl.⁵ : **G01N 27/416,** F02D 41/00

(54) **SCHALTUNG ZUM MESSEN DES INNENWIDERSTANDES EINER LAMBDASONDE.**

(30) Priorität : **04.02.89 DE 3903314**

(43) Veröffentlichungstag der Anmeldung :
**27.03.91 Patentblatt 91/13**

(45) Bekanntmachung des Hinweises auf die
Patenterteilung :
**20.10.93 Patentblatt 93/42**

(84) Benannte Vertragsstaaten :
**DE ES FR GB**

(56) Entgegenhaltungen :
**EP-A- 0 258 543**
**DE-A- 2 744 844**
**DE-A- 3 117 790**
**US-A- 4 609 452**
**US-A- 4 609 453**

(56) Entgegenhaltungen :
**Patent Abstracts of Japan, volume 8, No. 23,**
**P251, abstract from JP 58-179349, publ 1983-**
**10-20 FUJI DENKI SEIZO**
**Patent Abstracts of Japan, volume 7, No. 2,**
**P166, abstract from JP 57-163862, publ 1982-**
**10-08 OKI DENKI KOGYO K.K.**
**Patent Abstracts of Japan, volume 7, No. 133,**
**M221, abstract from JP 58-48750, publ 1983-**
**03-22 TOYOTA JIDOSHA KOGYO K.K.**
**Patent Abstracts of Japan, Volume 10, No. 60,**
**P435 abstract from JP 60-203846, publ 1985-**
**10-15 YANMAR DIESEL K.K.**

(73) Patentinhaber : **ROBERT BOSCH GMBH**
**Postfach 30 02 20**
**D-70442 Stuttgart (DE)**

(72) Erfinder : **GRABS, Manfred**
**Moensheimerstrasse 36**
**D-7135 Wiernsheim (DE)**

EP 0 418 329 B1

**Beschreibung**

Die Erfindung betrifft eine Schaltung zum Messen des Innenwiderstandes einer Lambdasonde, wie sie insbesondere in Kraftfahrzeugen zum Messen des Sauerstoffanteils im Abgas verwendet wird. Es ist bekannt, daß die Sondenspannung bei tiefen Temperaturen stark von der Temperatur abhängt, weswegen sie erst ab einer Mindesttemperatur zum Regeln verwendet werden soll. Oberhalb der Mindesttemperatur sind die Meßergebnisse durch den Innenwiderstand der Sonde verfälscht, falls nicht stromlos gemessen wird, was in der Praxis nicht möglich ist.

Stand der Technik

Aus EP 0 258 543 A2 ist eine Schaltung zum Messen des Innenwiderstandes einer Lambdasonde bekannt, die einen Lastwiderstand aufweist, der wahlweise der Sonde durch einen Schalter parallel geschaltet wird. Ein Mittel zum Messen der Sondenspannung mißt dieselbe in belastetem und unbelastetem Zustand. Aus den beiden Spannungswerten und dem Widerstandswert des Lastwiderstandes wird der Innenwiderstand berechnet. Sobald dieser unter einen vorgegebenen Schwellenwert gefallen ist, wird die Spannung der unbelasteten Sonde für Regelzwecke verwendet.

Für alle Schaltungen, mit denen die Spannung einer Lambdasonde erfaßt wird, läßt sich mit Hilfe des Innenwiderstandes der Sonde bei ausreichend warmer Sonde ein Zusammenhang zwischen der gemessenen Spannung und derjenigen Spannung aufstellen, die bei einem jeweils vorliegenden Lambdawert eigentlich gemessen würde, wenn der Innenwiderstand demjenigen einer betriebswarmen Sonde entsprechen würde. Die gemessene Spannung läßt sich also mit Hilfe des Innenwiderstandes korrigieren. Problematisch ist, daß sich der Innenwiderstand beim Erwärmen der Lambdasonde über mehrere Zehnerpotenzen ändert, nämlich von einigen MegOhm bei 200 °C bis herunter auf weniger als 100 Ohm bei 800 °C. Soll in diesem gesamten Widerstandswertbereich der Innenwiderstand mit der oben genannten Schaltung gemessen werden, ist es erforderlich, mehrere Lastwiderstände mit sehr unterschiedlichen Widerstandswerten zu verwenden. Dies, weil, um zunächst feststellen zu können, wann die Sonde ausreichend betriebswarm ist, und um danach zuverlässige Meßergebnisse zu erhalten, der Wert des Lastwiderstandes in seiner Größenordnung mit dem Innenwiderstand übereinstimmen muß. Dies führt dazu, daß der Innenwiderstand zunächst durch Belasten mit einem willkürlich gewählten Lastwiderstand grob gemessen werden muß. Ist durch diese Messung der Innenwiderstand abgeschätzt, muß auf einen Lastwiderstand mit einem Widerstandswert umgeschaltet werden, der in der Größenordnung des Innenwiderstandes liegt. Erst dann kann der Innenwiderstand zuverlässig gemessen werden (siehe etwa die nachveröffentlichte WO 89/01623). Bei Temperaturänderungen der Sonde, also insbesondere im Warmlauf, ist es dadurch erforderlich, immer wieder von einem Lastwiderstand auf einen anderen umzuschalten. Der Schaltungsaufbau und das mit ihm ausführbare Meßverfahren sind also kompliziert.

In einem engen Widerstandsbereich kann der Innenwiderstand einer Sonde ohne jede Gleichspannungsbelastung mit einer Schaltung gemessen werden, wie sie in DE 31 17 790 A1 (US 4.419.190) beschrieben ist. Es wird ein Wechselstrom bekannter Stärke durch die Sonde geschickt und die an der Sonde abfallende Wechselspannung wird gemessen.

Der Wechselspannungsanteil wird vom Sondengleichspannungsanteil abgetrennt und aus Wechselstrom und Wechselspannung wird der Innenwiderstand bestimmt. Das mit dieser Schaltung ausführbare Meßverfahren ist also einfach; jedoch ist der Schaltungsaufwand ebenfalls erheblich.

Der Erfindung liegt die Aufgabe zugrunde, eine einfache Schaltung zum Messen des Innenwiderstandes einer Lambdasonde anzugeben.

Vorteile der Erfindung

Die erfindungsgemäße Schaltung zeichnet sich durch ein Sperrschicht-Bauteil aus, das mit Hilfe eines Schalters wahlweise der Lambdasonde parallelschaltbar ist. Es ist ein Mittel zum Messen der Sondenspannung in belastetem und unbelastetem Zustand vorhanden.

Diese Schaltung hat den Vorteil, daß sich eine Spannung im belasteten Zustand einstellt, die sich mit dem Logarithmus des Innenwiderstandes ändert. In einem Ausführungsbeispiel wurde bei Belasten mit einem Transistor bei Vorliegen eines fetten Gemisches bei 100 Ohm Innenwiderstand (etwa 800 °C) eine Spannung im belasteten Zustand von 800 mV gemessen. Pro Zehnerpotenz Innenwiderstandserhöhung änderte sich die Meßspannung um etwa 70 mV, so daß bei einem Innenwiderstand von etwa 1 MOhm (etwa 280 °C) eine Spannung von 420 mV abgegriffen wurde.

Problematisch beim Verwenden eines Sperrschicht-Bauteils statt eines Ohmschen Widerstandes als Lastwiderstandsbauteil ist, daß der in das Meßergebnis eingehende Sperrstrom stark temperaturabhängig ist. Diese Temperaturabhängigkeit macht sich nur dann nicht störend bemerkbar, wenn dafür gesorgt wird, daß nur geringe Temperaturschwankungen an der Schaltung auftreten, z. B. dadurch, daß diese in einem Steuergerät untergebracht wird, dessen Temperatur geregelt wird.

Ist die Schaltung Temperaturänderungen unterworfen, ist es von Vorteil, das Sperrschicht-Bauteil in gutem Wärmekontakt mit einem Temperatur-Meßelement anzuordnen. Vorteilhafterweise sind noch weitere Bauteile eines Steuergerätes in gutem Wärmekontakt mit diesem Temperatur-Meßelement angeordnet, wodurch es möglich ist, temperaturabhängige Eigenschaften dieser Bauteile mit Hilfe der Temperaturmessung zu kompensieren. Diese Maßnahme kann auch dann mit großem Vorteil ergriffen werden, wenn zu den temperaturabhängigen Bauteilen im Steuergerät kein Sperrschicht-Bauteil für eine Schaltung zum Messen des Innenwiderstandes einer Lambdasonde gehört.

Als Sperrschicht-Bauteil ist ein Transistor von besonderem Vorteil. Dies, weil bei Transistoren gleicher Stromverstärkung der Sperrstrom im wesentlichen unabhängig von Bauteileigenschaften ist, was z. B. für Dioden nicht gilt. Unabhängig vom verwendeten Transistor ergeben sich damit bei vorgegebenem Typ bei jeweils gleicher Sondenspannung und gleichem Innenwiderstand gleiche Meßergebnisse. Außerdem ist dann der stark temperaturabhängige Sperrstrom leicht meßbar, nämlich dadurch, daß er an einem zweiten Transistor erfaßt wird, der in gutem Wärmekontakt mit dem belastenden Transistor steht. Wenn die Schaltung über zwei Konstantstromquellen verfügt, ist es mit Hilfe des zweiten Transistors auch möglich, die Temperaturspannung zu messen.

Sperrstrom und Temperaturspannung können nicht nur mit Hilfe eines zweiten Transistors, sondern auch mit Hilfe des belastenden Transistors gemessen werden. Jedoch sind dann eine größere Anzahl von Schaltern erforderlich. Der zusätzliche Transistor ist kostengünstiger, als es zusätzliche Schalter sind und das Meßverfahren gestaltet sich ohne dauernd erforderliches Umschalten einfacher.

Zeichnung

Fig. 1     Schaltbild einer Schaltung zum Messen des Innenwiderstandes einer Lambdasonde mit Hilfe eines belastenden Transistors; und

Fig. 2     Schaltbild entsprechend dem von Fig. 1, jedoch ergänzt um einen Schaltungsteil zum Messen von Sperrstrom und Temperaturspannung.

Beschreibung von Ausführungsbeispielen

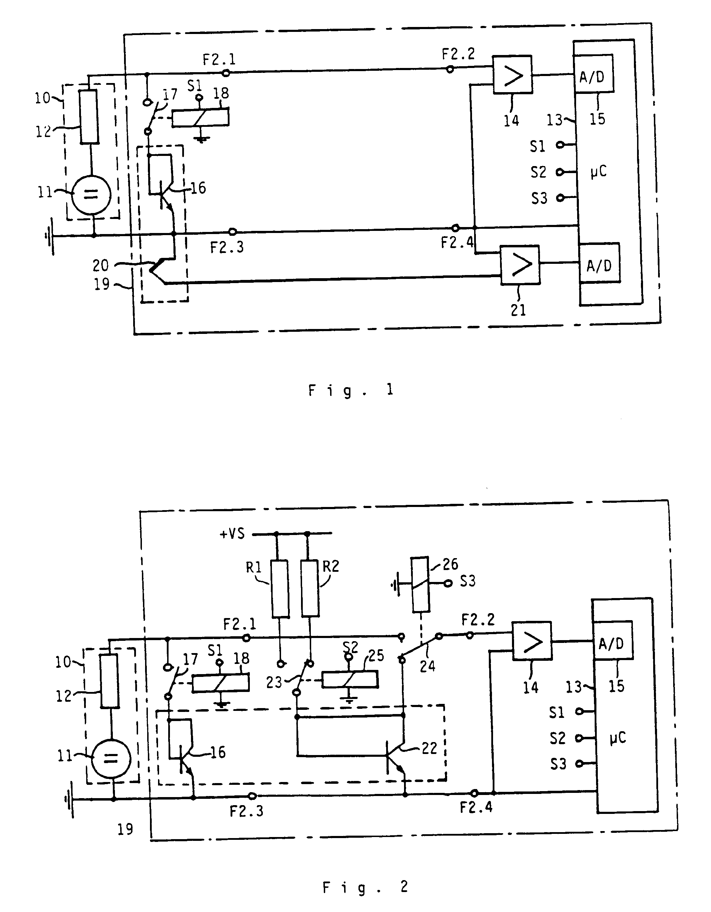

In der Schaltung gemäß Fig. 1 ist unter anderem eine Lambdasonde 10 durch ihr Ersatzschaltbild dargestellt, das aus einer Sondenspannungsquelle 11 und einem Sondenwiderstand 12 besteht. Die Sondenspannungsquelle 11 gibt die Sondenspannung US ab. Der Sondenwiderstand 12 weist einen Innenwiderstand RS auf, der von der Temperatur der Sonde stark abhängt. Er beträgt z. B. bei 800 °C etwa 100 Ohm und bei 280 °C etwa 1 MOhm. Die Sondenspannung US wird durch ein Mittel zum Messen der Sondenspannung erfaßt, das als Mikrocomputer 13 ausgebildet ist. Die von einem Sondenspannungsverstärker 14 verstärkte Sondenspannung wird durch einen A/D-Wandler 15 in ein digitales Signal umgewandelt, das vom Mikrocomputer 13 verarbeitbar ist. Die Sondenspannung US schwankt zwischen einigen wenigen Millivolt bei warmer Sonde, die ein mageres Gemisch mißt, und etwa 900 mV bei warmer Sonde in fettem Gemisch. Diese Spannung wird durch den Sondenspannungsverstärker 14 um den Faktor 5 verstärkt. In dieser Anmeldung wird jedoch immer auf unverstärkte Spannungen Bezug genommen.

Zum Belasten der Lambdasonde 10 ist ein Lasttransistor 16 vorhanden, der mit Hilfe eines Lastschalters 17 der Sonde 10 parallelschaltbar ist. Der Lastschalter 17 wird von einem Lastschalterrelais 18 angesteuert. Dieses erhält sein Steuersignal von einem Ausgang S1 vom Mikrocomputer 13. Es wird darauf hingewiesen, daß bei einer praktischen Ausführung kein Lastschaltrelais mit mechanischem Schalter vorhanden ist, sondern ein Schalttransistor. In Fig. 1, und auch in Fig. 2, sind jedoch alle Schalter als mechanische Schalter mit Relais und nicht als Transistoren dargestellt, damit diejenigen Transistoren, auf die es für die Funktion der Widerstandsmeßschaltung ankommt, besonders deutlich hervortreten.

Sobald der Lasttransistor 16 der Lambdasonde 10 parallelgeschaltet ist, fließt ein Laststrom IL durch den so gebildeten Stromkreis. Dieser Laststrom IL erzeugt am Sondenwiderstand 12 einen Spannungsabfall vom Wert RS x IL, der der Sondenspannung US entgegengerichtet ist. Die Spannung UL bei Last beträgt demgemäß

$$UL = US - RS \times IL.$$

Daraus berechnet sich der Innenwiderstand der Sonde zu:

$$RS = (US - UL)/IL \quad (1)$$

Es wird darauf hingewiesen, daß die bei Belastung der Lambdasonde 10 anfallende Spannung UL dann am Sondenspannungsverstärker 14 auftritt, wenn der Lastschalter 17 geschlossen ist, sich also gerade in der anderen Stellung befindet, wie sie in Fig. 1 dargestellt ist. Wegen der in Fig. 1 anderen Stellung ist dort auch nur die Sondenspannung US bei unbelasteter Sonde am Eingang des Sondenspannungsverstärkers 14 eingezeichnet.

In Gleichung (1) ist der Laststrom als unbekannte Größe enthalten. Für diesen gilt:

$$IL = ISP \times \exp(UL/UT), \text{ mit} \quad (2)$$

ISP = Sperrstrom (bauteilunabhängige Transistorkonstante) und
UT = Temperaturspannung ($kT/e0$)

Gleichung (2) in Gleichung (1) eingesetzt ergibt für den Innenwiderstand RS:

$$RS = (1/ISP) \times (US - UL) \times \exp(-UL/UT) \quad (3)$$

Es sei zunächst angenommen, daß der Lasttransistor 16 in einem Steuergerät 19 angeordnet ist, dessen Temperatur auf einen konstanten Wert geregelt wird. Das Steuergerät 19 ist in Fig. 1 durch eine strichpunktierte Linie dargestellt. Bei bekannter konstanter Temperatur sind die Werte von Sperrstrom ISP und Temperaturspannung UT bekannt. Mit den gemessenen Werten der Spannung US der Sonde im unbelasteten Zustand und der Spannung UL der Sonde im belasteten Zustand ergibt sich dann aus Gleichung (3) der Innenwiderstand.

Mit der Schaltung gemäß Fig. 1, d. h. unter Verwendung eines npn-Transistors, dessen Basis und Kollektor zusammengeschaltet sind, als Lasttransistor 16, ergaben sich für die gemessene Spannung UL im belasteten Zustand bei einer Sondenleerlaufspannung von 1V die folgenden Werte:

| RS | 100 $\Omega$ | 1 k$\Omega$ | 10 k$\Omega$ | 100 k$\Omega$ | 1 M$\Omega$ |
|---|---|---|---|---|---|
| UL | 700 mV | 630 mV | 560 mV | 490 mV | 420 mV |

Aus diesem Beispiel ist ersichtlich, daß sich die Meßwerte deutlich voneinander unterscheiden und daß sie in einem gut erfaßbaren Bereich liegen. Der Innenwiderstand kann somit über seinen gesamten Bereich von mehreren Zehnerpotenzen genau und mit geringem Aufwand gemessen werden.

In der Praxis ist es die Ausnahme, daß die Temperatur eines Steuergerätes geregelt wird. Normalerweise ist die Temperatur des Steuergerätes nicht bekannt und sie ändert sich in weiten Grenzen. Dann schwankt aber auch die Temperaturspannung UT etwas und der Sperrstrom ISP schwankt sehr stark. Um die Temperatur des Lasttransistors 16 zum anschließenden Berechnen von Sperrstrom und Temperaturspannung messen zu können, ist beim Ausführungsbeispiel gemäß Fig. 1 ein Thermoelement 20 vorhanden, das in gut wärmeleitendem Kontakt mit dem Lasttransistor 16 steht. Dieser gut wärmeleitende Kontakt ist durch eine gestrichelte Linie angedeutet, die den Lasttransistor 16 und das Thermoelement 20 umschließt. Die Spannung vom Thermoelement 20 wird nach Verstärkung durch einen Thermospannungsverstärker 21 dem Mikrocomputer 13 zugeführt. Dieser berechnet den Innenwiderstand aus Gleichung (3), wobei er für den Sperrstrom ISP und die Temperaturspannung UT den für die jeweils gemessene Temperatur gültigen Wert einsetzt.

Es ist von Vorteil, wenn nicht nur der Lasttransistor 16 in gut wärmeleitendem Kontakt mit dem Thermoelement 20 oder einem anderen Temperatur-Meßelement gebracht wird, sondern wenn diese Maßnahme auch für andere elektronische Bauteile im Steuergerät ergriffen wird, die temperaturabhängige Eigenschaften aufweisen. Bisher bemühte man sich, temperaturabhängige Eigenschaften von Steuergerätebauteilen durch besondere Kompensationsschaltungen oder durch Auswahl von Bauteilen mit geringem Temperaturgang zu begegnen. Z. B. wird eine möglichst wenig temperaturabhängige Referenzspannung mit einer Spezialschaltung erzeugt. Diese Schaltung kann erheblich vereinfacht werden, wenn die Temperatur temperaturabhängiger Bauteile bekannt ist und dann Temperatureinflüsse auf rechnerischem Wege durch den in jedem Steuergerät vorhandenen Mikrocomputer kompensiert werden. Die Maßnahme, ein Temperatur-Meßelement in gutem Wärmekontakt mit elektronischen Bauteilen anzuordnen, die temperaturabhängige Eigenschaften aufweisen, ist also nicht nur in Zusammenhang mit einer Schaltung zum Messen des Innenwiderstandes einer Lambdasonde von Vorteil. Die Maßnahme kann vielmehr auch bei solchen Steuergeräten angewandt werden, die über keine Schaltung zum Messen des Innenwiderstandes einer Lambdasonde verfügen.

Die Schaltung gemäß Fig. 2 unterscheidet sich von der gemäß Fig. 1 nur dadurch, daß das Thermoelement 20 mit dem zugehörigen Thermospannungsverstärker 21 nicht vorhanden sind und daß stattdessen zwischen den in Fig. 1 eingezeichneten Punkten P2.1 - P2.4 ein Schaltungsteil vorhanden ist, das zum Ausgleichen von Temperatureffekten dient. Dieses Schaltungsteil verfügt über einen Kompensationstransistor 22, einen Kompensationsschalter 23, einen Umschalter 24 und zwei Konstantstromquellen, die durch zwei Widerstände R1 und R2 gebildet sind, die an die Versorgungsspannung +VS von z. B. 5 V angeschlossen sind. Der Kompensationsschalter 23 wird von einem Kompensationsschalterrelais 25 und der Umschalter 24 von einem Umschalterrelais 26 gesteuert. Diese erhalten ihre Ansteuersignale über Anschlüsse S2 bzw. S3 am Mikrocomputer 13. Als Kompensationstransistor 22 könnte auch der Lasttransistor 16 selbst verwendet werden, jedoch wären dann noch mehr Schalter erforderlich, als sie das Ausführungsbeispiel gemäß Fig. 2 erfordern. Es wird darauf hingewiesen, daß beim Ausführungsbeispiel gemäß Fig. 2 das Lastschaltrelais 18 ohne weiteres auch das Schalten des Kompensationsschalters 23 vornehmen kann. In der praktischen Ausführung sind als Schalter zwei Transistoren vorhanden, deren Basis gemeinsam angesteuert wird.

Mit Hilfe des soeben erläuterten Schaltungsteiles läßt sich unter Ausnutzung von Gleichung (2) der Sperrstrom ISP berechnen. Dazu wird ein konstanter Laststrom IL vom Wert IR1 eingestellt, d. h. ein Strom, dessen Stärke durch die Werte von Versorgungsspannung VS und erstem Widerstand R1 bestimmt ist. Die am Transistor abfallende Spannung wird als UR1 bezeichnet. Aus Gleichung (2) errechnet sich mit Hilfe des bekannten Laststromes IR1 und der gemessenen Spannung UR1 der Sperrstrom ISP wie folgt:

$$ISP \; = \; IR1 \; x \; exp( \, - \, UR1/UT) \quad (4)$$

Wenn der mit Hilfe von Gleichung (4) berechnete Wert für den Sperrstrom ISP in Gleichung (3) eingesetzt wird, ist dort nur noch eine nicht genau bekannte Größe enthalten, nämlich die Temperaturspannung UT. Für Messungen, die keine allzu hohe Genauigkeit verlangen, kann der Wert der Temperaturspannung UT auf einen mittleren Wert gesetzt werden, wie er z. B. für 20 °C gilt. Für genauere Messungen wird dagegen wie folgt weiterverfahren.

Nachdem die am Kompensationstransistor 22 abfallende Spannung UR1 beim Durchfließen eines konstanten Stromes IR1 gemessen worden ist, wird auch eine Spannung UR2 gemessen, die an ihm beim Durchfließen eines kosntanten zweiten Stromes IR2 abfällt. Es gilt dann eine Gleichung entsprechend der Gleichung (4), nämlich:

$$ISP \; = \; IR2 \; x \; exp( \, - \, UR2/UT) \quad (4')$$

Aus den Gleichungen (4) und (4') errechnet sich die Temperaturspannung UT wie folgt:

$$UT \; = \; (UR2 \; - \; UR1)/LN(UR2/UR1) \quad (5)$$

Der aus Gleichung (5) berechnete Wert für die Temperaturspannung UT kann unmittelbar in Gleichung (3) eingesetzt werden. Außerdem wird der Wert der Temperaturspannung UT in Gleichung (4) eingesetzt und der dadurch genau bestimmte Wert der Sperrspannung ISP wird zum Auswerten von Gleichung (3) verwendet. So läßt sich der Innenwiderstand RS genau bestimmen, ohne daß die Temperatur des Steuergerätes 19 selbst bekannt ist.

Statt eines Transistors kann als belastendes Bauteil auch ein anderes Sperrschicht-Bauteil verwendet werden, insbesondere eine Diode. Jedoch weisen Dioden den Nachteil auf, daß bei ihnen der Sperrstrom bauteilabhängig ist.

**Patentansprüche**

1. Schaltung zum Messen des Innenwiderstandes einer Lambdasonde (10) mit
   - einem Lastwiderstands-Bauteil und
   - einem Schalter (17) zum wahlweisen Parallelschalten des Lastwiderstands-Bauteils zur Sonde, und
   - einem Mittel (13) zum Messen der Sondenspannung in belastetem und unbelastetem Zustand, **dadurch gekennzeichnet**, daß
   - das Lastwiderstands-Bauteil ein Sperrschicht-Bauteil (16) ist, so daß die daran abfallende Spannung (UL) logarithmisch vom Laststrom (IL) abhängt.

2. Schaltung nach Anspruch 1, **dadurch gekennzeichnet**, daß das Sperrschicht-Bauteil ein Transistor (16) ist.

3. Schaltung nach Anspruch 2, **dadurch gekennzeichnet**, daß das Sperrschicht-Bauteil ein npn-Transistor (16) ist, und daß die Basis und der Kollektor dieses Transistors zusammengeschaltet sind.

4. Schaltung nach einem der Ansprüche 1 - 3, **gekennzeichnet durch** ein Temperatur-Meßelement (20) in gutem Wärmekontakt mit dem Sperrschicht-Bauteil (16), zum Messen der Temperatur des letzteren.

5. Schaltung nach Anspruch 4, **dadurch gekennzeichnet**, daß das Temperatur-Meßelement in einem Steuergerät (19) in gutem Wärmekontakt mit elektronischen Bauteilen angeordnet ist, die temperaturabhängige Eigenschaften aufweisen.

6. Schaltung nach einem der Ansprüche 1 - 3, **gekennzeichnet durch** einen Kompensationstransistor (22), der in gutem Wärmekontakt mit dem belastenden Transistor (16) steht, zum Messen des temperaturabhängigen Transistorsperrstroms.

7. Schaltung nach Anspruch 6, **gekennzeichnet durch** eine erste Konstantstromquelle (VS + R1) zum Erzeugen eines konstanten Stromflusses mit einer ersten bekannten Stromstärke durch den Kompensationstransistor (22).

8. Schaltung nach Anspruch 7, **gekennzeichnet durch** eine zweite Konstantstromquelle (VS + R2) zum Erzeugen eines konstanten Stromflusses mit einer zweiten bekannten Stromstärke durch den Kompensationstransistor (16), abwechselnd mit dem Stromfluß der ersten Stromstärke, zum Bestimmen der Temperaturspannung aus den bei den beiden Stromstärken am Kompensationstransistor abfallenden Spannungen.

## Claims

1. Circuit for measuring the internal resistance of a lambda probe (10) having
   - a load resistor component and
   - a switch (17) for optionally connecting the load resistor component in parallel with the probe, and
   - a means (13) for measuring the probe voltage in the loaded and unloaded state, characterised in that
   - the load resistor component is a barrier junction component (16) so that the voltage (UL) which drops across it depends logarithmically on the load current (IL).

2. Circuit according to Claim 1, characterised in that the barrier junction component is a transistor (16).

3. Circuit according to Claim 2, characterised in that the barrier junction component is an npn-transistor (16), and in that the base and the collector of this transistor are connected to one another.

4. Circuit according to one of Claims 1 - 3, characterised by a temperature measuring element (20) in good thermal contact with the barrier junction component (16) for measuring the temperature of the said component (16).

5. Circuit according to Claim 4, characterised in that the temperature measuring element is arranged in a control device (19) in good thermal contact with electronic components which have temperature-dependent properties.

6. Circuit according to one of Claims 1 - 3, characterised by a compensation transistor (22) which is in good thermal contact with the loading transistor (16) for measuring the temperature-dependent transistor cutoff current.

7. Circuit according to Claim 6, characterised by a first constant current source (VS + R1) for producing a constant current with a first known current strength across the compensation transistor (22).

8. Circuit according to Claim 7, characterised by a second constant current source (VS + R2) for producing a constant current with a second known current strength across the compensation transistor (16), alternately with the current of the first current strength, in order to determine the temperature voltage resulting from the voltage drops at the compensation transistor for the two current strengths.

## Revendications

1. Circuit de mesure de la résistance interne d'une sonde lambda (10) avec
   - un composant de résistance de charge et
   - un interrupteur (17) pour mettre à volonté en parallèle le composant de résistance de charge et la sonde et
   - un moyen (13) pour mesurer la tension de sonde à l'état chargé et à l'état non chargé, caractérisé en ce que:
   - le composant de résistance de charge est un composant à couche de jonction (16) (ou couche d'arrêt) telle que la tension appliquée sur celui-ci (UL) sot une fonction logarithmique du courant de charge (IL).

2. Circuit selon la revendication 1, caractérisé en ce que le composant à couche de jonction est un transistor (16).

3. Circuit selon la revendication 2, caractérisé en ce que le composant à couche de jonction est un transistor npn (16) et en ce que la base et le collecteur de ce transistor sont réunis.

4. Circuit selon l'une des revendications 1-3, caractérisé par un élément de mesure de température (20) ayant un bon contact thermique avec le composant à couche de jonction (16), pour mesurer la température de ce dernier.

5. Circuit selon la revendication 4, caractérisé en ce que l'élément de mesure de température est disposé dans un appareil de commande (19) en bon contact thermique avec des composants électroniques, qui présentent des propriétés dépendant de la température.

6. Circuit selon l'une des revendications 1-3, caractérisé par un transistor de compensation (22), qui est en bon contact thermique avec le transistor de charge (16) pour mesurer le courant de blocage du transistor dépendant de la température.

7. Circuit selon la revendication 6, caractérisé par une première source de courant constant (VS+R1) pour produire un courant constant avec une première intensité connue à travers le transistor de compensation (22).

8. Circuit selon la revendication 7, caractérisé par une deuxième source de courant constant (VS+R2) pour produire un courant constant avec une deuxième intensité connue à travers le transistor de compensation (16), alternativement avec le passage du courant de première intensité, pour déterminer la tension de température à partir des tensions appliquées dans le cas des deux intensités au transistor de compensation.

Fig. 1

Fig. 2

8